(19) Europäisches Patentamt
European Patent Office
Office européen des brevets

(11) Publication number: **0 085 111**
**B1**

(12) # EUROPEAN PATENT SPECIFICATION

(45) Date of publication of patent specification: **07.01.87**

(51) Int. Cl.[4]: **B 01 D 13/00,** B 01 D 13/04

(21) Application number: **82902263.1**

(22) Date of filing: **02.08.82**

(86) International application number:
**PCT/JP82/00300**

(87) International publication number:
**WO 83/00443 17.02.83 Gazette 83/05**

(54) **COMPOSITE SEMIPERMEABLE MEMBRANE, PROCESS FOR ITS PRODUCTION, AND METHOD OF ITS USE.**

(30) Priority: **03.08.81 JP 120675/81**

(43) Date of publication of application:
**10.08.83 Bulletin 83/32**

(45) Publication of the grant of the patent:
**07.01.87 Bulletin 87/02**

(84) Designated Contracting States:
**DE FR GB NL SE**

(56) References cited:
**EP-A-0 014 054**
**GB-A-2 064 367**
**JP-A-51 088 479**
**JP-A-52 120 978**
**JP-A-52 152 879**
**JP-A-56 015 804**
**US-A-3 744 642**
**US-A-4 086 215**

**The file contains technical information submitted after the application was filed and not included in this specification**

(73) Proprietor: **TEIJIN LIMITED**
**11 Minami Honmachi 1-chome Higashi-ku**
**Osaka-shi Osaka-fu (JP)**

(72) Inventor: **KAWAGUCHI, Takeyuki**
**39-7, Hirata 6-chome Iwakuni-shi**
**Yamaguchi 740 (JP)**
Inventor: **TAMURA, Hiroki**
**Teijin Yamanouchi Apt.-3 1-3 Yamate-cho**
**3-chome**
**Iwakuni-chi Yamaguchi 740 (JP)**

(74) Representative: **Votier, Sidney David et al**
**CARPMAELS & RANSFORD**
**43 Bloomsbury Square**
**London WC1A 2RA (GB)**

(56) References cited:
**MAKROMOL. CHEM., vol. 177, 1976, BASEL (CH), V. ENKELMANN et al.: "Mechanism of interfacial polycondensation and the direct synthesis of stable polyamide membranes", pages 3177-3189**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 085 111 B1**

**Description**

Technical Field

The present invention relates to a composite semipermeable membrane and, more specifically relates to a composite semipermeable membrane having an excellent semipermeability and outstanding resistance to oxidation.

Background Art

In the early days of its development, a reverse osmosis membrane of the cellulose acetate type developed by Loeb and Sourirajan et al. was widely used because of its excellent basic performance and ease in preparation. However, it presented problems including hydrolizability of acidic and alkaline solutions, degenerative decomposition due to the growth of microbes, excessive density under high pressure, and unfitness for dry storage. Ameliorated varieties of reverse osmosis membranes made from synthetic high polymer materials were proposed to correct these defects. Du Pont proposed a reverse osmosis membrane made from wholly aromatic polyamide. This membrane was much improved in terms of hydrolizability and degenerative microbial decomposition; however, it never exceeded a cellulose acetate membrane in basic performance and it still maintained such defects as excessive density under high pressure and unfitness for dry storage.

The aforementioned membranes are what are called membranes of heterogenous system prepared after a method called phase separation, wherein the membrane is composed of a homogenous layer which functions as a separator and a porous layer which reinforces the membrane, both being made from the same material.

On the other hand, a method was proposed to prepare a reverse osmosis membrane, wherein a crosslinked thin film separation layer was formed by allowing a reactive hydrophilic polymer to react with a cross linking agent upon the porous layer prepared beforehand from a different material. This membrane proved to be greatly improved in hydrolizability, degenerative microbial decomposition, increase of density under high pressure, and dry storability in addition to improved basic performance. The North Star Research Institute proved that the use of polyethyleneimine as reactive hydrophilic polymer and the use of polyacid chloride such as isophthalic acid chloride or polyisocyanate such as toluylenediisocyanate made it possible to achieve the aforementioned improvements. At the sme time, however, it was clear that the membrane thus obtained encountered a major problem in forming a spiral module because of the weakness of the crosslinked layer due to the excess content of amine in polyethyleneimine used as material. Meanwhile, Universal Oil Products Corp. succeeded in correcting the aforementioned defects by the use of amine modified polyepichlorohydrin as the reactive hydrophilic polymer; however, it has recently been made known that it is difficult to make a membrane having high water permeability due to the difficulty in preparing its material epiamine and that there is a problem in securing a prolonged durability.

Filmtech Inc. (inventor: John E. Caddotte) has recently proposed a composite membrane prepared by cross-linking a low polymer aromatic amine such as methaphenylenediamine, paraphenylenediamine, etc. with an aromatic polyacid halide such as trimesic acid chloride on a microporous film (see Japanese Patent Laid-Open No. 147106/80 corresponding to EP—A—15149) with a disclosure that it has an excellent desalting performance and outstanding resistance to oxidation.

However, an investigation conducted into this composite membrane by the inventors of the present invention showed that the resistance to oxidation of this membrane was maintained only for a short duration since the membrane started to show typical phenomena of deterioration such as degradation of desalting performance and increase of permeability of water when only 150 hours passed in the continuous reverse osmosis test conducted in the presence of 4 to 5 ppm activated chlorine. This test is described later in a comparison example of the present invention.

Earlier than the disclosure of the abovementioned invention, a proposal was made with relation to a composite membrane of high resistance to oxidation obtained by cross-linking polyamine having a secondary amino group only with an aromatic polyacid halide (see Japanese Patent Application Laid-Open No. 139802/80); however, this membrane generally had the defects of having insufficient removability measured in both salt and sucrose. More particularly the removability of salt was at most 90 to 95% even in the separation of a solute of a large molecule such as magnesium chloride and the removability of sucrose hardly exceeded 95%.

European Patent No. EP—A—0014054 (Caddotte) discloses composite membranes composed of polyfunctional secondary amines and polyfunctional acid halides. However these membranes have properties such that high salt and strong chlorine resistance are mutually exclusive.

Disclosure of the Invention

As a result of a concentrated study made in an effort to correct the abovementioned defects found with membranes proposed heretofore, the inventors of the present invention have found, contrary to the past knowledge, that a semipermeable membrane of high performance having excellent resistance to oxidation and higher desalting function as compared with conventionally known semipermeable membranes, especially a membrane invented by Caddotte et al. mentioned above, can be prepared from polyamide

having an aliphatic primary amino bond, which has been said to make a membrane insufficiently resistant to oxidation, when a proper selection of an acid component is exercised.

According to the present invention there is a composite semipermeable membrane comprising a microporous membrane and an amino group-containing membrane formed thereon, characterised in that said amino group-containing membrane is a cross-linked high polymer membrane containing structural units expressed by the following formula (I) at a mole ratio of at least 50%

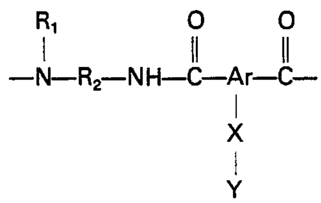

(I)

wherein $R_1$ indicates an alkyl group, which may contain a hydroxyl group, having 1 to 3 carbon atoms, or a hydrogen atom; $R_2$ indicates an aliphatic hydrocarbon residue, which may contain an oxygen atom, having 2 to 15 carbon atoms; Ar indicates a condensed or non-condensed aromatic hydrocarbon residue; X indicates a carbonyl group

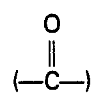

or a sulfonyl group ($-SO_2-$); Y at least partly indicates a direct bond where crosslinking takes place and the remainder indicates —OM or

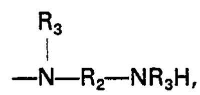

where M indicates a hydrogen atom, alkali metal, alkaline earth metal, or ammonium group, and $R_3$ has the same definition as $R_1$, at least one $R_3$ being a hydrogen atom.

The invention also provides a process for the preparation of a composite semipermeable membrane which comprises reacting a diamine compound which contains a compound expressed by the following formula (III) at a mole ratio of at least 50%

$$R_1NH-R_2-NH_2 \qquad \text{(III)}$$

wherein definitions of $R_1$ and $R_2$ are the same as those given in the foregoing definitions;

with a cross-linking agent mainly consisting of a compound expressed by the following formula (IV) on a microporous membrane:

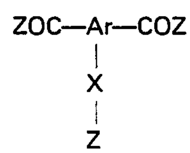

(IV)

wherein Z's are the same or different from each other, indicating a halogen atom; X is a carbonyl bond

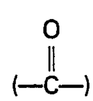

or a sulfonyl bond ($-SO_2-$):

The invention further provides a method of employing the abovementioned composite semipermeable membrane repeatedly in a reverse osmosis operation comprising a bacteriocidal treatment by use of an aqueous solution of pH 4 to pH 7 containing 0.5 to 5,000 ppm bactericide of chlorine type followed by washing with an aqueous solution containing 10 to 5,000 ppm reducing agent.

The composite semipermeable membrane proposed by the present invention comprises a microporous membrane, an explanation of which is made later, and a cross-linked high polymer membrane formed thereon having structural units expressed by the aforementioned formula (I), in which $R_1$ is an alkyl group, which may contain a hydroxyl group, having 1 to 3 carbon atom or a hydrogen atom.

More specifically $R_1$ is a hydrogen atom, $-CH_3$, $-C_2H_5$, $-C_3H_7$, $-C_2H_4OH$, or $-CH_2 \cdot CH(OH) \cdot CH_3$,

preferably a hydrogen atom, $-CH_3$, $-C_2H_5$, or $-C_3H_7$ of which a hydrogen atom is especially preferable.

$R_2$ is an aliphatic hydrocarbon residue, which may contain an oxygen atom, having 2 to 15, preferably 2 to 14 carbon atoms and what is mentioned here as aliphatic may be a straight-chain, branched or a cyclic aliphatic.

As

$$R_2,\ -CH_2CH_2-,\ -CH_2\cdot CH_2\cdot CH_2-,\ -(CH_2)_n-\ (n=4-11),$$

$$-\underset{\displaystyle CH_3}{\underset{|}{C}}HCH_2-,\ -\overset{\displaystyle CH_3}{\overset{|}{C}}H\overset{\displaystyle CH_3}{\overset{|}{C}}H-,\ -CH_2\cdot CH_2\cdot O\cdot CH_2\cdot CH_2-,\ -CH_2\cdot CH_2\cdot CH_2\cdot O\cdot$$

$$CH_2\cdot CH_2\cdot CH_2-,$$

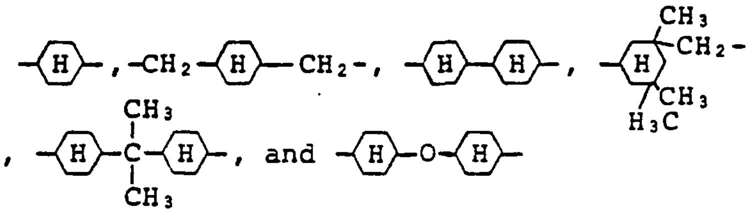

and

may be mentioned and, of these,

$$-CH_2\cdot CH_2-,\ -CH_2\cdot CH_2\cdot CH_2-,$$

$$-\underset{\displaystyle CH_3}{\underset{|}{C}}HCH_2-,$$

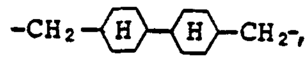

and 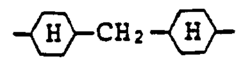

are preferable.

Ar is a condensed or noncondensed aromatic hydrocarbon residue, preferably having 6 to 13 carbon atoms. As

Ar, 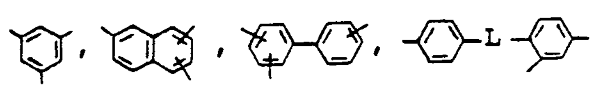

$$(L=-O-,\ -CH_2-,\ -\overset{\displaystyle CH_3}{\overset{|}{\underset{\displaystyle CH_3}{\underset{|}{C}}}}-\ ),$$

etc. may be mentioned and

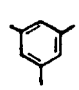

is especially preferable.

X is a carbonyl bond or a sulfonyl bond, of which carbonyl bond is preferable.

Y must be at least partially a direct bond where cross-linkage takes place and the rest may represent

$$-OM \text{ or } -\overset{\displaystyle R_3}{\overset{|}{N}}-R_2-NR_3H.$$

Here, M is a hydrogen atom, alkali metal, alkaline earth metal, or ammonium group, of which a hydrogen atom and alkali metal are preferable. $R_3$ may be the same as $R_1$; however, at least one of the $R_3$'s is a hydrogen atom. It is desirable that 30 to 90%, more desirably 50 to 70% of Y are direct bonds participating in the cross-linkage, and, if possible, it is most desirable that Y are wholly participated in the cross-linkage.

The aforementioned cross-linked high polymer membrane must necessarily contain structural units, which are expressed by formula (I) and composed of the abovementioned constituents, at a mole ratio of at least 50% and it is more desirable for the membrane to contain such structural units at a mole ratio of 50% or more. As for the structural units other than said structural units expressed by formula (I), no specific

restrictions may be placed on their use so far as they do not interfere with the effectiveness of the present invention. However, in case where a small amount of structural units originating in an aliphatic diamine containing a secondary amine is contained, water permeability of the obtained membrane can be improved without damaging both the excellent resistance to oxidation and outstanding desalting performance which are the primary results of the present invention.

As the structural units of such type, those structural units expressed by the following formula (II) may be mentioned:

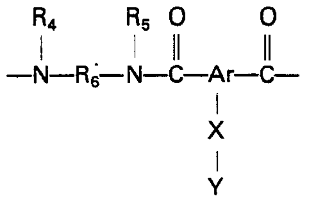

(II)

wherein $R_4$ and $R_5$ are alkyl groups, each of which may independently contain a hydroxyl group, having 1 to 3 carbon atoms, or otherwise $R_4$ and $R_5$ are linked to one another or respectively to $R_6$ to form a piperazyl group or dipiperidylalkylen group, which may be substituted by a methyl group and/or an ethyl group, together with two nitrogen atoms and $R_6$ to which they are linked; $R_6$ indicates an aliphatic hydrocarbon residue, which may contain an oxygen atom, having 2 to 15 carbon atoms. The definitions of Ar, X and Y are the same as the aforementioned ones.

In the abovementioned formula, $R_4$ and $R_5$ can be alkyl groups, which may have a hydroxyl group, having 1 to 3 carbon atoms and as desirable examples, those referred to in the case of the aforementioned $R_1$ may again be cited, including $-CH_3$, $-C_2H_5$, $-C_2H_4-OH$, and $-C_3H_7$ of which $-C_2H_5$ is especially desirable. $R_4$ and $R_5$ are linked to one another or respectively to $R_6$ to form a piperazyl group or dipiperidylalkylen group, which may be substituted by a methyl group and/or an ethyl group, together with two nitrogen atoms and $R_6$ to which they are linked, desirably to form a piperazyl group not substituted by a methyl group and/or an ethyl group. Ar, X, and Y are defined the same as the above.

The structural units expressed by the aforementioned formula (II) are contained at a mole ratio of less than 40% and in some desirable modes the content is in the range of mole ratio of 5% to 30%.

The cross-linked high polymer membrane may be allowed to contain structural units originating from an aromatic diamine, or more particularly structural units expressed by the following formula (VI) at a mole ratio of less than 30%:

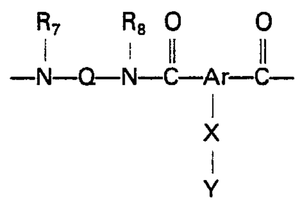

(VI)

wherein $R_7$ and $R_8$, being the same or different from each other, are a hydrogen atom or a methyl group; Q is a noncondensed aromatic hydrocarbon residue, which may be substituted by $-COOM$ and/or $-SO_3M$ and also may contain an ether bond, having 6 to 15 carbon atoms; and definitions of Ar, X, Y are the same as those mentioned in the foregoing. As

Q, 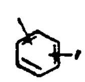, 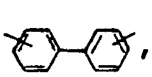, 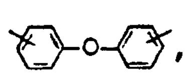, 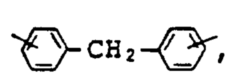,

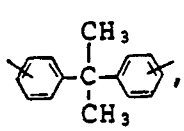, 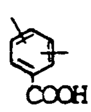, 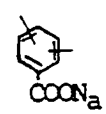, and 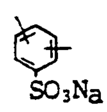

may be mentioned and

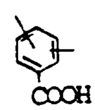 and 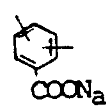

are especially desirable.

Also the cross-linked high polymer membrane of the present invention may contain structural units expressed by the following formula (VII) at a mole ratio of less than 40%, more preferably less than 30%:

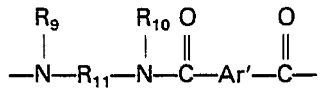

(VII)

wherein $R_9$ and $R_{10}$ are the same or different from each other and indicate a hydrogen atom or an alkyl group, which may contain a hydroxyl group, having 1 to 3 carbon atoms, or otherwise $R_9$ and $R_{10}$ are linked to one another or respectively to $R_{11}$ to form a piperazyl group or dipiperidylalkylen group, which may be substituted by a methyl group or an ethyl group, together with two nitrogen atoms and $R_{11}$ to which they are linked; $R_{11}$ indicates an aliphatic hydrocarbon residue, which may contain an oxygen atom, having 2 to 15 carbon atoms, or a non-condensed aromatic hydrocarbon residue, which may be substituted by —COOM and/or —$SO_3M$ and also may contain an ether bond, having 6 to 15 carbon atoms, where M indicates a hydrogen atom, alkali metal, alkaline earth metal, or ammonium group; and Ar' indicates a noncondensed or condensed aromatic hydrocarbon residue, which may contain an ether bond or sulfonyl bond, having 6 to 15 carbon atoms.

The cross-linked high polymer membrane can be additionally covered with a protective coating. As protective coatings, coatings of such water-soluble polymers as polyvinyl pyrrolidone and polyvinyl methyl ether, or of such water-insoluble polyvinyl alcohol, or of porous aliphatic polyamide may be mentioned. Of these coatings, water-insoluble polyvinyl alcohol coatings and porous aliphatic polyamide coatings are preferable. As water-insoluble polyvinyl alcohol coatings, those obtained by thermally gelating polyvinyl alcohol and those obtained by cross-linking polyvinyl alcohol with glutaraldehyde, folmalin, glyoxal, or a sulfurous acid adduct thereof may be mentioned. As porous aliphatic polyamide coatings, porous coatings of such aliphatic polyamides as poly-ε-caproamide and polyhexamethyl adipamide may be mentioned.

As the microporous membrane which functions as a supporting substratum in the present invention, vitreous porous materials, sintered metals, ceramic materials, and such organic polymers as cellulose ester, polystyrene, vinylbutyral, polysulfone, vinyl chloride, etc. may be mentioned.

A polysulfone membrane displays especially outstanding properties when used as a microporous membrane in the present invention and polyvinyl chloride also makes a useful membrane. A process for the preparation of a polysulfone microporous membrane is also described in the Report No. 359 published by the OSW, U.S.A.

The desirable size of pores on the surface of such a membrane is in the range of about 10 nm to 100 nm; however, the range of sizes is not limited to these values. The size of pores on the surface of a membrane can be anywhere between 5 nm and 500 nm depending upon the final use of a composite membrane. These microporous membranes can be of symmetry structure or asymmetry structure; however, membranes of asymmetry structure are desirably used. In case where the membrane constant of these microporous membrane is $10^{-4}$ g/cm$^2$·sec·atm or less, the water permeability becomes too low and in case where the membrane constant is 1 g/cm$^2$·sec·atm or more, the desalting percentage is liable to decrease, both being undesirable. Accordingly, the membrane constant in the range of 1 to $10^{-4}$ g/cm$^2$·sec·atm give a desirable result and the membrane constant in the range of $10^{-1}$ to $10^{-3}$ g/cm$^2$·sec·atm give the most desirable result. The membrane constant referred to above is defined to express the value of pure water permeability under pressure of 2 kg/cm$^2$ and expressed in a unit of g/cm$^2$·sec·atm.

It is desirable that in use, these microporous membranes are reinforced with a woven or a nonwoven fabric on their reverse side. As such woven or nonwoven fabrics, fabrics made from polyethylene terephthalate, polystyrene, polypropylene, nylon or vinyl chloride may be mentioned as ideal examples.

The composite semipermeable membrane of the present invention comprises a microporous membrane having a thickness of about 40 μm to 5 mm, especially in case of a microporous membrane of organic polymer, the thickness is in the range of 40 μm to 70 μm, and the aforementioned cross-linked high polymer membrane having a thickness of 200 Å to 1500 Å formed thereon, with a protective coating having a thickness of 0.1 μm to 1 μm formed thereon furthermore, if necessary.

The composite membrane of the present invention is obtained by cross-linking a diamine compound which contains an aliphatic diamine expressed by the following formula (III) at a mole ratio of at least 50% and preferably 60% or more

$$R_1NH—R_2—NH_2 \qquad \text{(III)}$$

wherein definitions of $R_1$ and $R_2$ are the same as the aforementioned definitions;

with a cross-linking agent, which mainly comprises an aromatic polyacid halide expressed by the following formula (IV), on the microporous membrane

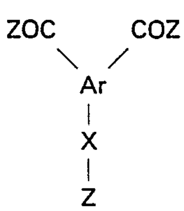

(IV)

wherein a definition of Ar is the same as the aforementioned one; Z's are the same or different from one another, indicating a halogen atom; X indicates a sulfonyl bond or a carbonyl group.

The aliphatic diamines expressed by the abovementioned formula (III) to be used in this invention, are those which are soluble in a solvent, preferably soluble in water or a lower alcohol. The following diamines may be listed as examples:

$H_2NCH_2CH_2NH_2$, $H_2NCH_2CH_2CH_2NH_2$,

$H_2N{-}(CH_2)_4{-}NH_2$, $H_2N{-}(CH_2)_5{-}NH_2$,

$H_2N{-}(CH_2)_6{-}NH_2$, $H_2N{-}(CH_2)_7{-}NH_2$,

$H_2N{-}(CH_2)_8{-}NH_2$, $H_2N{-}(CH_2)_9{-}NH_2$,

$H_2N{-}(CH_2)_{10}NH_2$, $H_2N{-}(CH_2)_{11}NH_2$,

$(CH_3){-}NHCH_2CH_2NH_2$, $(C_2H_5){-}NHCH_2CH_2NH_2$,

$HOCH_2CH_2NHCH_2CH_2NH_2$,

$CH_3CHCH_2NHCH_2CH_2NH_2$,
OH

$H_2NCH_2CH_2OCH_2CH_2NH_2$, $H_2NCH_2CH_2CH_2OCH_2CH_2CH_2NH_2$,

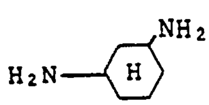 , 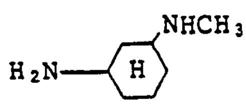 , 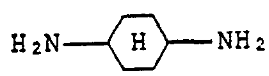 ,

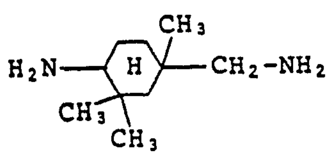 , 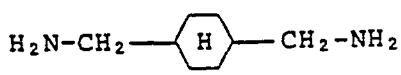 ,

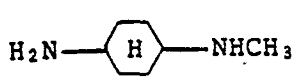 , 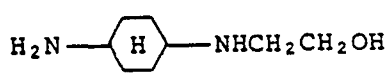 ,

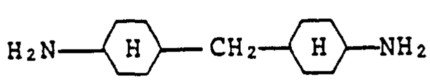 , 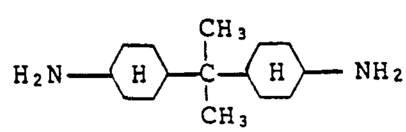 ,

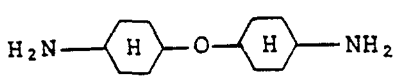 , 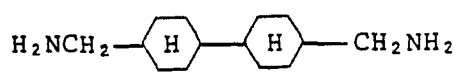

Of the aliphatic diamines mentioned above, ethylenediamine and cyclohexanediamine are especially desirable. The abovementioned aliphatic diamines can be used singly or in combination of more than one.

The use of the abovementioned diamine in combination with other polyamine compound is also included in the scope of the present invention. The following polyamines are suitable to be used.

(1) Straight-chain aliphatic secondary diamines:

$CH_3NHCH_2CH_2NHCH_3$
$C_2H_5NHCH_2CH_2NHC_2H_5$
$HOCH_2CH_2NHCH_2CH_2NHCH_2CH_2OH$

(2) Cyclic aliphatic secondary diamines:

Piperazine (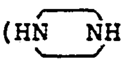), 2-methylpiperazine (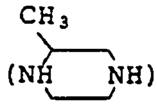),

2-ethylpiperazine (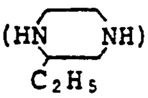),

2,5-dimethylpiperazine (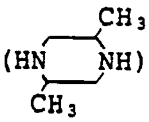),

dipiperidylpropane (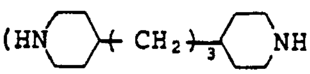)

The combined use of these polyamines can properly adjust and improve the water permeability and/or desalting performance of the composite membranes of the present invention.

The following aromatic diamines can also be used without damaging the effectiveness of the present invention, for instance, at a mole ratio not exceeding 30%, though their use is not especially desirable.

(3) Aromatic diamines:

Metaphenylenediamine (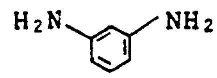),

paraphenylenediamine (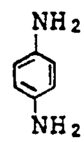),

4,4'-diaminodiphenyl (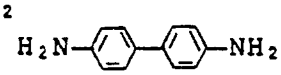),

4,4'-diaminodiphenyl ether (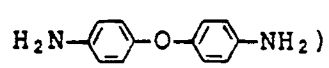),

3,4'-diaminodiphenyl ether (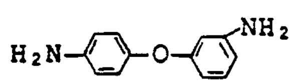),

3,3'-diaminodiphenyl (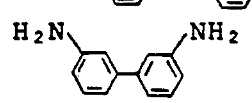),

3,5-diaminobenzoate (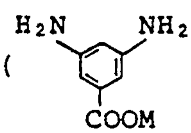, where -COOM indicates carboxylate.)

In case where these diamines are used, aliphatic secondary diamines should be used at a mole ratio of 50% or less, desirably 40% or less, and most desirably at 30% or less of the whole diamine components, and aromatic diamines should be 30% or less.

In obtaining the composite membrane of the present invention by use of the aforementioned diamine compounds, it is necessary to apply a solution of any of these amine compounds on the surface of said microporous membrane. Any methods of application including a dip coating method, roller coating method, wick coating method, spray coating method, etc. may be adopted in applying the amine solution; however, the coating conditions must be controlled to keep the thickness of the applied coating of the amine compound in the range of 0.01 to 2 μm, preferably 0.02 to 1 μm, and more preferably 0.05 to 0.7 μm. When the thickness of a coating of amine compound is less than the abovementioned lower limit (0.01 μm), the active layer of the finally obtained composite membrane will be too thin to maintain the mechanical

strength for practical use. When the coating is made thicker than 2 μm, the active layer becomes too thick, developing a tendency to reduce the water permeability of the composite membrane. These diamines must be soluble and it is desirable that they are especially soluble in water, methanol, ethanol, isopropanol, methyl cellosolve, dioxane, or tetrahydrofuran, or a mixed solvent consisting of more than one of these solvents at a ratio of 0.1 g/100 ml or more, and preferably 0.5 g/100 ml or more. It is especially desirable to use diamines having a solubility of 0.1 g/100 ml or more, more desirably 0.5 g/100 ml or more, in water.

A diamine compound solution of the present invention which is prepared by dissolving more than 0.1% of at least one kind of solvent (water is especially desirable) selected from a group of the abovementioned solvents is coated on, or impregnated into, the aforementioned microporous membrane of high microporosity.

The microporous membrane, which is applied with the diamine, is subjected to a cross-linking treatment with the use of an aromatic halide expressed by formula (IV) containing a functional group, which is capable of forming a carbonamide bond or a sulfonamide bond by reacting with said amino group, whereby the diamine is transformed into a cross-linked membrane on the microporous membrane.

The functional group contained in the multifunctional compound, which is used as a cross-linking agent in this invention, is either a carbonyl halide group ($-COZ$) or a sulfonyl halide group ($-SO_2Z$) containing 3 of these functional groups in a molecule. Especially useful functional groups are an acid chloride group and a sulfonyl chloride group. These functional groups contained plurally in a molecule may be similar to or different from one another. As for the multifunctional compound, aromatic multifunctional compounds are useful. The following may be mentioned as examples of these cross-linking agents.

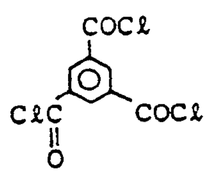 , 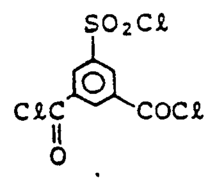 , 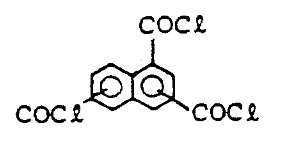 ,

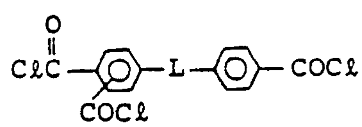

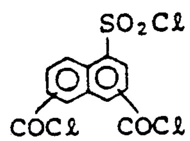

(wherein L = $-O-$ , $-CH_2-$ , 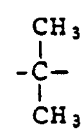 )

The abovementioned aromatic multifunctional compounds may be used singly or in combination.

According to the present invention, it has been made clear that, in some instances, the combined use of the trifunctional compound and the bifunctional compound expressed by the following formula (VI), instead of the single use of said trifunctional compound, facilitates the control of the desalting percentage and/or water permeability of the finally obtained membrane:

$$ZOC—Ar—ZOC \quad (VI)$$

wherein a definition of Z is the same as the definition given in the aforementioned formula (IV).

As such bifunctional compounds, the following may be mentioned as examples:

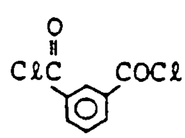 , 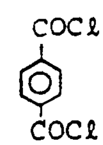 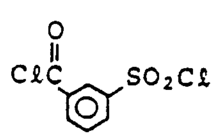 , 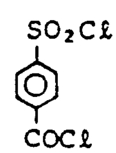 ,

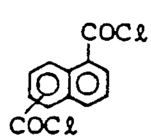

In cases where these bifunctional compounds are used, their use should be at a mole ratio of 1 to 50%, and desirably 5 to 30%, of said trifunctional compounds.

The composite membrane of the present invention can be obtained by bringing the diamine into direct contact with a solution of the abovementioned multifunctional compound on the microporous membrane. Solvents to be used in dissolving multifunctional compounds should be those which do not substantially dissolve said polyamide compounds and base materials, such as hydrocarbon type solvents e.g. n-hexane, n-heptane, n-octane, cyclohexane, n-nonane, n-decane, etc. and such halogen type hydrocarbons (e.g.) carbon tetrachloride, difluorotetrachloroethane, trifluorotrichloroethane, hexachloroethane, etc., may be mentioned. The appropriate concentration of a multifunctional compound dissolved in the solvent may be varied depending upon the kind of multifunctional compound, solvent, base material, and other conditions employed and the optimum value of concentration can be determined experimentally.

However, in general, the desired effect can be obtained at the concentration of about 0.1 to 5.0% by weight, preferably 0.5 to 3.0% by weight.

The cross linking of a polyamine compound by the use of a multifunctional compound can be appropriately achieved by causing an interface reaction in the hetero-phase between the membrane and the solution. The reaction can be induced by impregnating the polyamine compound coated membrane with a solution of multifunctional compound. An interface reaction promoter can be contained in the diamine compound or in a solution of the multifunctional compound in order to promote the interface cross linking reaction. Caustic alkali, sodium phosphate, pyridine, tertiary amine, surface active agent, sodium acetate, and the like can be used as useful promoters.

Said interface cross linking reaction of the diamine compound can be carried out at room temperature to about 100°C, desirably at a temperature between 20 and 50°C, for 2 seconds to 10 minutes, and desirably for 10 seconds to 5 minutes. This interface cross linking reaction can be conducted in such a way as to be mainly focused on the surface of the membrane.

After an excess solution of multifunctional compound is drained for 10 seconds to 2 minutes as may be required, the membrane supported by the base material is cured at room temperature or, if necessary, is subjected to heat treatment at 40 to 130°C, desirably at 50 to 80°C for about 1 to 30 minutes, desirably for about 5 to 20 minutes, thus completing said interface cross-linking reaction and also achieving the water insolubility of the diamine compound.

In this way, the desired composite membrane having a thin cross-linked polycondensate coating of selective permeability formed on the surface of a microporous membrane is obtained.

A description is given in the above as to a method of first coating the microporous membrane with a diamine compound; however, there is another method of first coating the microporous membrane with a cross-linking agent and then allowing the agent to react with the diamine compound.

Examples of the cross-linked polyamides which are able to form an active layer of the composite membrane of the present invention thus obtained are given below.

(1)
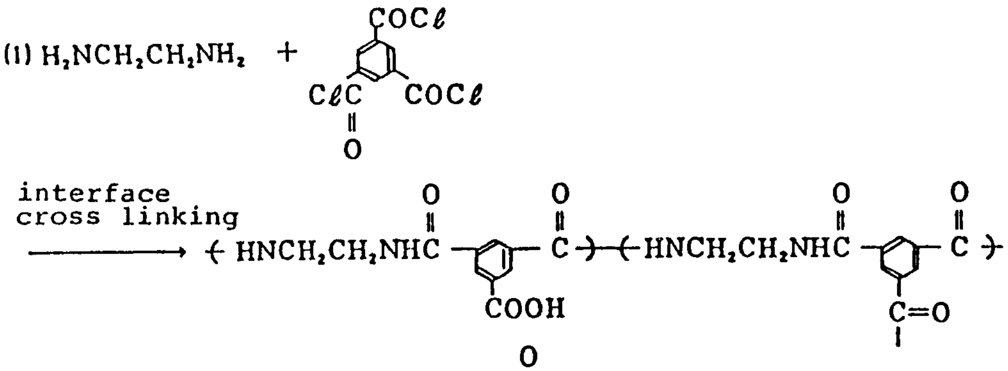


(2)
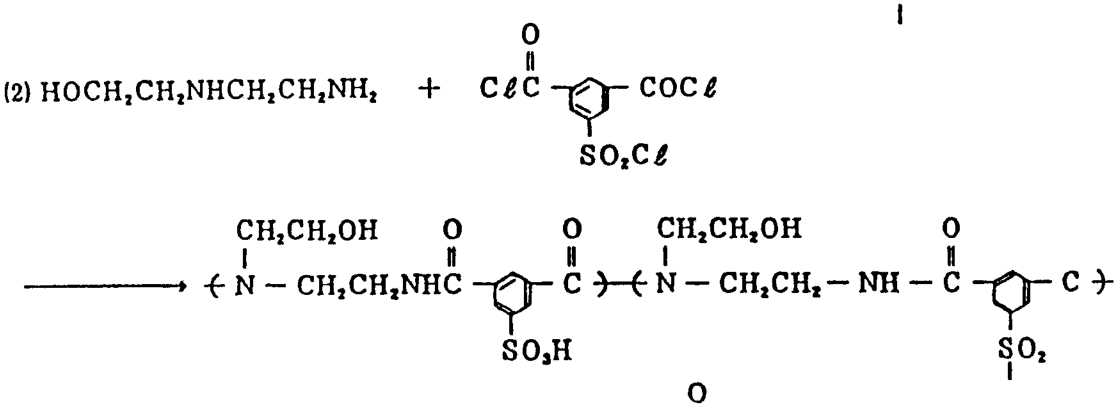

(3)
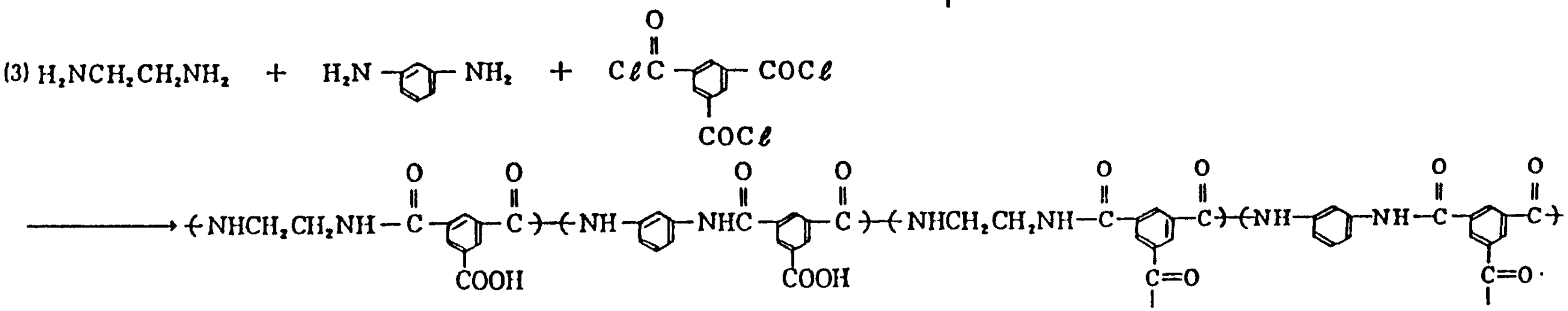

(4)

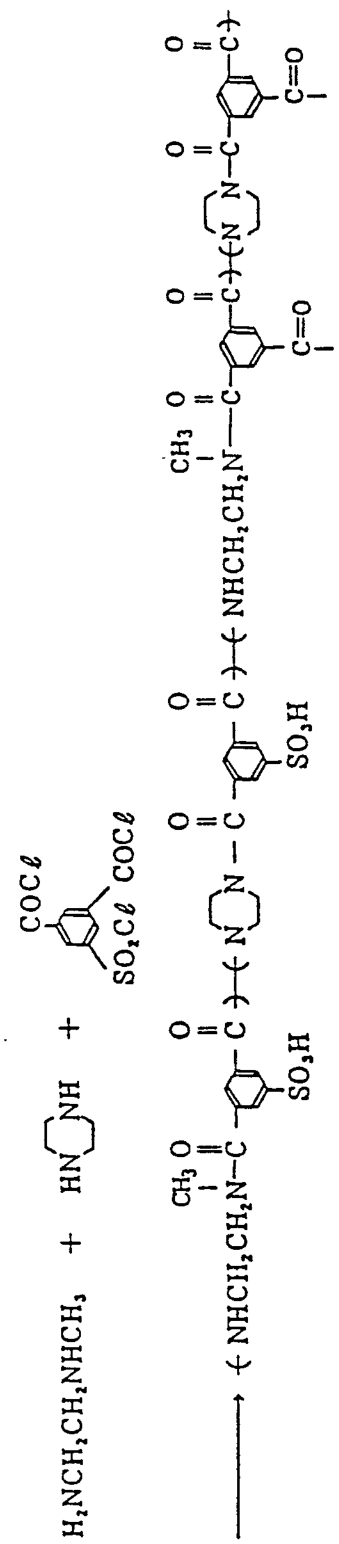

(5)

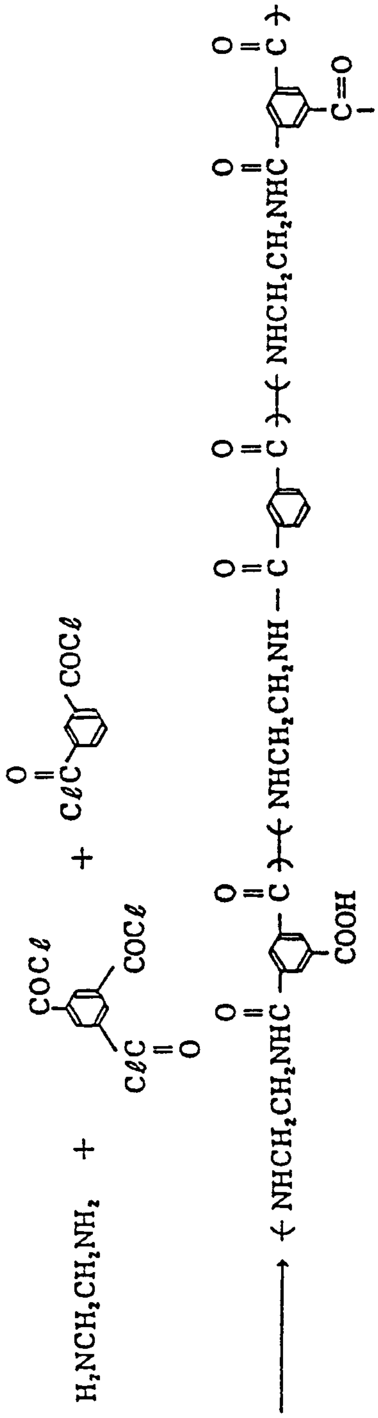

The thus obtained composite membrane of the present invention is endowed with extraordinary resistance to oxidation in addition to its outstanding basic reverse osmotic performance, resistance to blocking under pressure, heat resistance, PH resistance, etc. and it may be said that it has the marked usefulness and characteristics that are not found with other conventionally known membranes.

Furthermore in the present invention, a water-soluble or water-insoluble protective coating can be formed on the cross-linked high polymer membrane of the composite semipermeable membrane.

To illustrate such protective coatings by example, coatings of such compounds as polyvinyl pyrrolidone and polyvinyl methyl ether may be mentioned as water-soluble protective coatings, whilst a water-insolubilized coating of polyvinyl alcohol and a porous coating of aliphatic polyamide may be mentioned as water-insoluble protective coatings.

Protective coatings of polyvinyl pyrrolidone and polyvinyl methyl ether can be obtained by dissolving said polymer in a solvent such as: water, lower alcohol, or a mixture thereof, and coating and drying the thus prepared solution on the cross-linked high polymer membrane.

A water-insolubilized coating of polyvinyl alcohol can be obtained by dissolving polyvinyl alcohol in water together with formalin, glyoxal, glutaraldehyde, and one or more compounds selected from the sulfites thereof, or together with ammonium persulfate and/or potassium persulfate, coating the surface of the cross-linked high polymer membrane with thus prepared solution, and subjecting the coating to heat-treatment at 50 to 120°C, desirably at 70 to 100°C, for 5 to 30 minutes to have the coating acetal cross-linked or self-gelated.

A porous coating of aliphatic polyamide can be obtained by forming a polyamide coating on the cross-linked high polymer membrane by application of a solution prepared by dissolving aliphatic polyamide in a methanol solution containing a poring agent such as calcium chloride, for instance, followed by treatment with water wherein the poring agent is extracted to make the coating porous.

The composite semipermeable membrane obtained can be used in various separation operations by exploiting the physical laws of diffusion and osmosis. In ordinary separation operation, the membrane is washed with a bacteriocide after it has been used for a specific period. Chlorine type bacteriocides are often used. When treated with a bacteriocide of highly concentrated chlorine solution, conventional membranes deteriorate, while the composite membrane of this invention remains good for continued use because of its strong resistance to oxidation. Furthermore, in the present invention said treatment of the membrane with a chlorine type bacteriocide may be followed usefully by the treatment of the membrane with a solution of reducing agent to release the adsorbed chlorine, thus recovering its performance afresh.

A method of bacteriociding the membrane includes a method in which the membrane is made to contact an aqueous solution in the pH range between 4 to 7 containing 0.5 ppm—5,000 ppm of a bacteriocide, such as sodium hypochlorite, hypochlorous acid, hypobromous acid, hydrogen peroxide, sodium perborate, iodophor and sodium dichloroisocyanurate, at 10 to 50°C for 10 to 100 minutes.

The membrane may then be treated with a reducing agent. A method for such treatment, includes a method in which the bacteriocided membrane is made to contact an aqueous solution containing 10 ppm—5,000 ppm of a reducing agent such as sodium thiosulfate, sodium hydrosulfite, sodium sulfite, and sodium bisulfite, at 10 to 50°C for 10 to 100 minutes.

The abovementioned methods of regenerating the membrane are especially useful in the fields where solutions, which are apt to cause the propagation of bacteria, like aqueous solutions containing, for instance, saccharides, amino acids, alcohols, organic carboxylic acids, etc. are separated by use of the membrane.

The present invention will now be described more specifically with reference to examples given below.

Reverse osmosis test:

The test was conducted at 25°C under pressure of 42.5 kg/cm$^2$G with an ordinary continuous pump circulation reverse osmosis equipment by using an aqueous solution in the pH range of 6.0 to 6.5 always containing 5,000 ppm sodium chloride and 4 to 5 ppm hypochlorous acid.

Accelerated chlorine resistance evaluation method

In addition to the abovementioned reverse osmotic testing, an accelerated chlorine resistance evaluation test was conducted likewise by raising the concentration of hypochlorous acid to 1,000 ppm. The performance of the membrane in the test was shown by the data obtained from the membrane after it was further subjected to the reducing agent treatment.

Desalting percentage:

The desalting percentage described in the examples is a value obtained by the following equation:

$$\text{Desalting percentage (\%)} = \left(1 - \frac{\text{NaCl concentration in the dialyzate}}{\text{NaCl concentration in the stock solution to be dialyzed.}}\right) \times 100$$

Reference Example 1

Preparation of polysulfone porous supporting membrane

A piece of Dacron non-woven fabric of a dense texture (unit weight : 180 g/$m^2$) was fixed on a glass plate. A solution containing 12.5 wt % polysulfone, 12.5 wt % methyl cellosolve, and dimethylformamide making up the rest was cast to form a layer of about 0.2 mm thickness on said non-woven fabric and the layer was immediately gelated in a water bath at room temperature to obtain a porous polysulfone membrane reinforced with a non-woven fabric.

In the electron microphotograph, the porous polysulfone layer thus formed was about 40 to 70 μm thick, exhibited an asymmetry structure, and showed a large number of microphores about 200 to 700 Å on the surface. These porous base materials had a permeability to pure water (membrane constant) in the range of about 3.0 to 7.0 × $10^{-2}$ g/$cm^2$·sec·atm at 2 kg/$cm^2$G.

Example 1

The porous polysulfone membrane obtained in Reference Example 1 was immersed in an aqueous solution prepared by dissolving 1 g of ethylenediamine (immediately after distillation) in 100 ml of distilled water for 5 minutes, taken out of the aqueous solution, and drained at room temperature for 7 minutes while being hung vertically.

After the thus drained membrane was immersed in a solution containing 0.5 wt % trimesic acid chloride in hexane for 20 seconds, the membrane was air-dried at room temperature for 30 minutes.

When the thus obtained composite membrane was subjected to the reverse osmosis test under the conditions described above, the membrane showed initial performance values, desalting percentage of 98.9% and water permeability of 41.3 l/$m^2$·hr. The membrane was further put to the reverse osmosis test under the same conditions (with the osmosis solution constantly adjusted to pH 6.0 to 6.5 and 4 to 5 ppm hypochlorous acid content during the test), and the desalting percentage and water permeability obtained 200 hours, 500 hours, and 1,000 hours after the test was resumed were 99.1% and 37.5 l/$m^2$·hr, 99.3% and 31.4 l/$m^2$·hr, and 99.3% and 28.6 l/$m^2$·hr respectively. The result showed that the membrane maintained a very stabilized desalting performance though its water permeability decreased slightly.

After the composite membrane of Example 1 prepared under the abovementioned conditions was immersed in an aqueous solution of 0.1% NaOH for 24 hours, the membrane was washed several times with distilled water and dried under vacuum. The membrane was then immersed in chloroform and the cross-linked active layer polymer, which could be isolated by eluting the polysulfone microporous membrane, was thoroughly washed with chloroform, followed by washing with alcohol and also with water. When the powder polymer obtained by refining and drying said polymer was subjected to the Na atom absorption metric analysis, Na of 0.53 milliequivalent/g based on the conversion to sodium carboxylate groups (—COONa) was detected. The composition of the abovementioned polymer estimated from the value thus obtained is as follows:

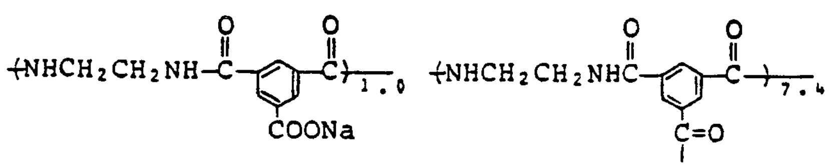

Comparison Example 1

A composite membrane was prepared according to the same method as Example 1, wherein an aqueous solution obtained by dissolving 2 g of metaphenylene diamine fresh from distillation in 100 ml of distilled water. Thus prepared membrane was subjected to the reverse osmosis chlorine resistance test under the same conditions as Example 1 to give initial performance values, water permeability of 26.5 l/$m^2$·hr and desalting percentage of 98.5%. The reverse osmosis test was again started under the same conditions and 100 hours later, the relation between water permeability and desalting percentage was 27.3 l/$m^2$·hr and 99.7%, the desalting percentage showing an improvement over the initial value. This relation, however, started changing its aspect and 200 hours later the relation was 41.9 l/$m^2$·hr and 99.3%, 500 hours later 56.4 l/$m^2$·hr and 98.2%, and 1,000 hours later 67.3 l/$m^2$·hr and 93.2%, showing the gradual degradation of the membrane.

Examples 2—6

Composite membranes were obtained in the same way as Example 1 except the use of amines described in Table 1 in the place of ethylenediamine. These membranes were subjected to the reverse osmosis oxidation resistance test under the same conditions as Example 1. The results are shown in Table 1. Compositions of these composite membrane active layer polymers estimated from the Na analytical values and the values obtained from elemental analyses of C, H, and N are shown in Table 2.

TABLE 1

| Example | Diamine | Cross-linking agent | Content of carboxylate groups *1 ( −COONa ) (milliequivalent / g ) | RO performance *2 | |
|---|---|---|---|---|---|
| | | | | W.F ( l /$m^2$•hr ) | S.R. ( % ) |
| 2 | N-methylethylenediamine | Trimesic acid chloride | 2.17 | 30.2 (21.6) | 97.3 (98.8) |
| 3 | N-ethylethylenediamine | do. | 2.36 | 25.7 (19.4) | 93.4 (96.9) |
| 4 | 1,3-diaminocyclohexane | do. | 1.12 | 31.4 (23.5) | 98.6 (99.4) |
| 5 | 1,4-diaminocyclohexane | do. | 1.21 | 27.0 (21.1) | 99.0 (99.7) |
| 6 | N-(ω-hydroxyethyl)ethylene-diamine | do. | 1.98 | 19.3 (15.4) | 92.6 (97.9) |

*1 : The measurement was conducted by subjecting the refined cross-linked active layer polymer, which was obtained by eluting the microporous base material in chloroform from the composite membrane immersed in an aqueous solution of 0.1% NaOH for 24 hours, to the Na atom absorptiometric analysis.

*2 : The values in parentheses show the membrane performances obtained from the continuous 1,000-hour reverse osmosis test.

TABLE 2

| Example | Na analytical value (%) | Elemental analytical value (%) | | | Polymer Composition * |
|---|---|---|---|---|---|
| | | C | H | N | |
| 2 | 4.9 8 | 4 7.5 6 | 4.3 6 | 1 1.1 0 | 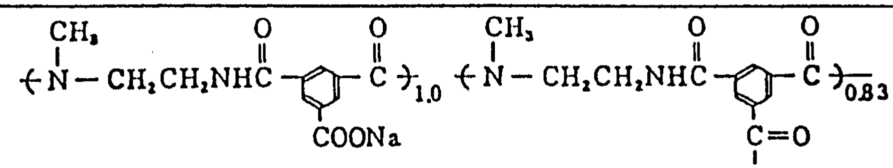 |
| 3 | 5.4 3 | 5 7.8 1 | 4.8 2 | 1 0.3 8 | 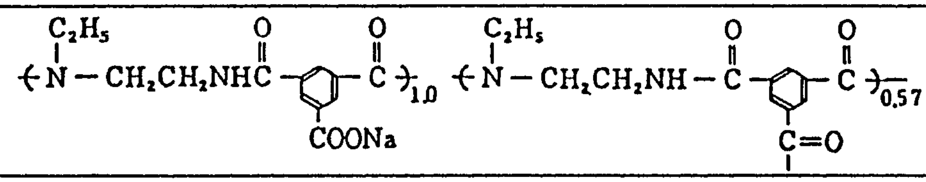 |
| 4 | 2.5 8 | 6 7.7 6 | 5.6 5 | 1 0.5 4 | 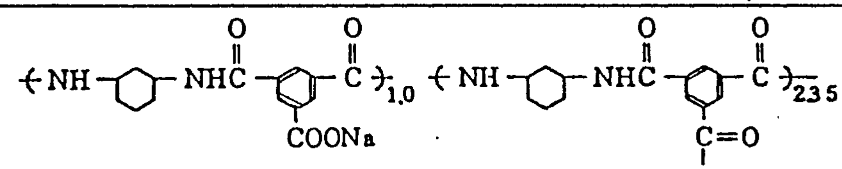 |
| 5 | 2.7 8 | 6 7.5 2 | 5.6 3 | 1 0.5 0 | 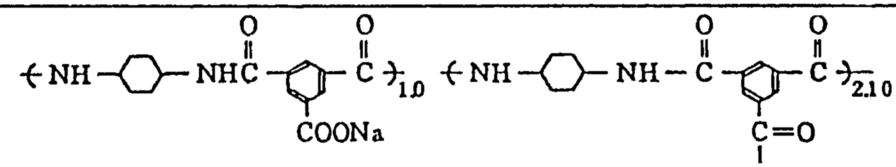 |
| 6 | 4.5 4 | 5 5.1 7 | 4.9 5 | 9.9 0 | 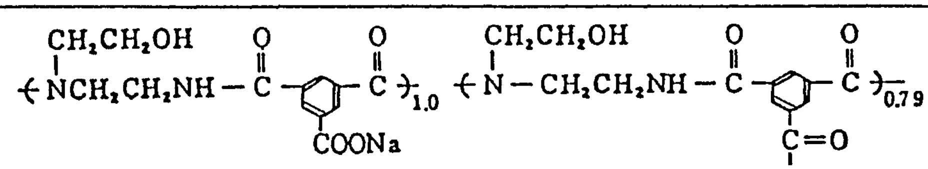 |

* The polymer compositions were estimated from Na analytical values and elemental analytical values of C, H, and N according to Example 1.

Example 7

A composite membrane was obtained according to the same method as Example 1 except for the use of 5-chlorosulfonylisophthalic acid chloride as cross-linking agent in the place of trimesic acid chloride. As the result of Na analysis made according to Example 1, the obtained membrane was identified as the composite membrane comprising a cross-linked polymer layer having a polymer composition expressed by the following formula.

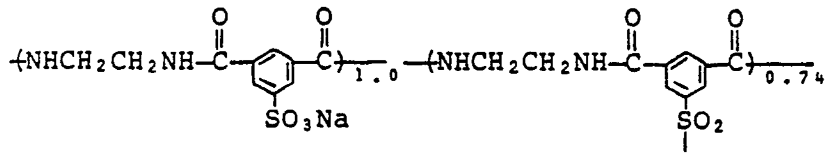

When this membrane was subjected to the reverse osmosis oxidation resistance test under the same conditions as Example 1, it represented initial values including the water permeability of 56.8 $l/m^2 \cdot hr$ and desalting percentage of 89.2%. When the test was further continued under the same conditions, the performance values were 43.6 $l/m^2 \cdot hr$ and 93.3% 200 hours later, 41.0 $l/m^2 \cdot hr$ and 95.1% 500 hours later, and 37.4 $l/m^2 \cdot hr$ and 97.7% 1,000 hours later respectively.

Example 8

A composite membrane was obtained according to Example 1, wherein a mixture of trimesic acid chloride and isophthalic acid chloride at a mole ratio of 3:1 was used as cross-linking agent instead of the single use of trimesic acid chloride. The active polymer layer of this composite membrane was subjected to Na analysis and elemental analysis (C, H, N) according to Example 1 and the obtained results showed that this polymer was a crosss-linked polymer having a polymer composition expressed by the following formula.

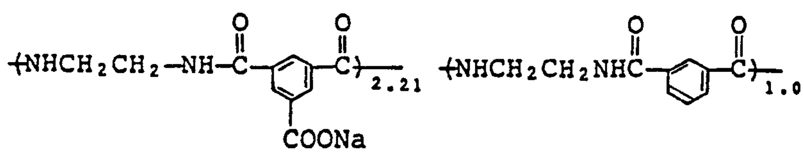

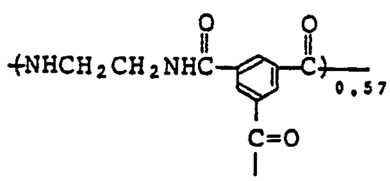

[Na analytical value : 5.74%, C : 54.96%, H : 3.84%, N : 11.95%]

When this composite membrane was subjected to the reverse osmosis test under the same conditions as Example 1, it represented initial performance values including the water permeability of 54.1 $l/m^2 \cdot hr$ and desalting percentage of 91.7%, followed by 48.2 $l/m^2 \cdot hr$ and 93.0% after the continuous 200-hour test, 45.5 $l/m^2 \cdot hr$ and 95.4% 500 hours after the start of the test, and 39.4 $l/m^2 \cdot hr$ and 96.3% 1,000 hours after the start of the test respectively.

Examples 9—12

Composite membranes were obtained according to Example 1, wherein respective mixtures of a diamine and ethylenediamine at a mole ratio of 1:2 as described in the following Table 3 were used instead of the single use of ethylenediamine. These membranes were subjected to the reverse osmosis test under the same conditions as Example 1 and the following results were obtained as shown in Table 3. The polymer compositions of active polymer layers of these composite membranes are shown in Table 4.

TABLE 3

| Example | Mixed diamine | Cross-linking agent | –COONa content *1 (milliequivalent /g) | Reverse osmosis performances *2 | |
|---|---|---|---|---|---|
| | | | | W.F. ( l /$m^2$·hr ) | S.R. (%) |
| 9 | Ethylenediamine + methaphenilenediamine | Trimesic acid chloride | 1.31 | 32.5 (28.2) | 97.4 (98.2) |
| 10 | Ethylenediamine + N,N′-dimethylethylene-diamine | do. | 1.64 | 40.8 (27.8) | 90.9 (93.7) |
| 11 | Ethylenediamine + piperazine | do. | 1.41 | 43.9 (29.1) | 92.9 (95.6) |
| 12 | Ethylenediamine + 1,3-diaminocyclohexane | do. | 1.25 | 26.3 (20.5) | 98.6 (99.4) |

*1 : The polymer compositions were estimated from Na analytical values and elemental analytical values of C, H, and N according to Example 1.

*2 : The values in parentheses show the membrane performances obtained from the continuous 1,000-hour osmosis test.

TABLE 4

| Example | Na analytical value (%) | Elemental analytical value (%) | | | Polymer Composition* |
|---|---|---|---|---|---|
| | | C | H | N | |
| 9 | 3.0 2 | 5 9.3 1 | 4.3 7 | 1 1.7 4 | 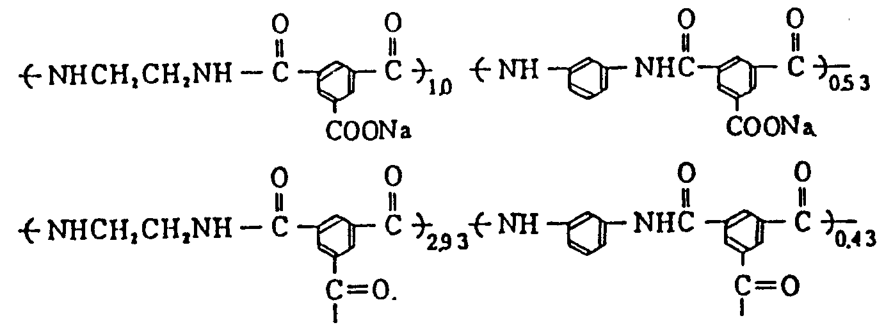 |
| 10 | 3.7 7 | 5 7.4 2 | 4.0 8 | 1 1.8 3 | 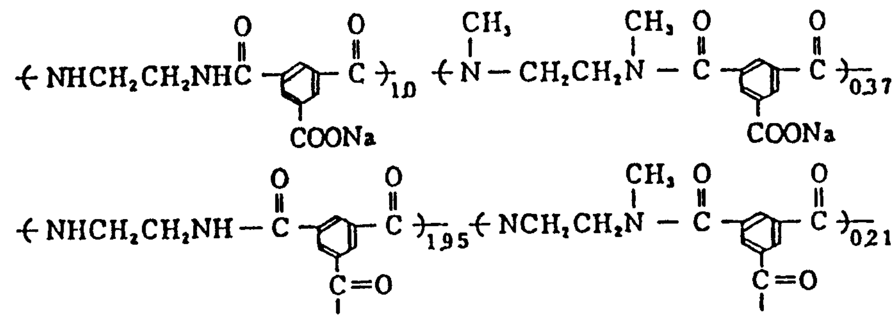 |

TABLE 4

| Example | Na analytical value (%) | Elemental analytical value. (%) | | | Polymer Composition * |
|---|---|---|---|---|---|
| | | C | H | N | |
| 11 | 3.2 5 | 5 7.7 1 | 3.9 5 | 1 2.0 9 | 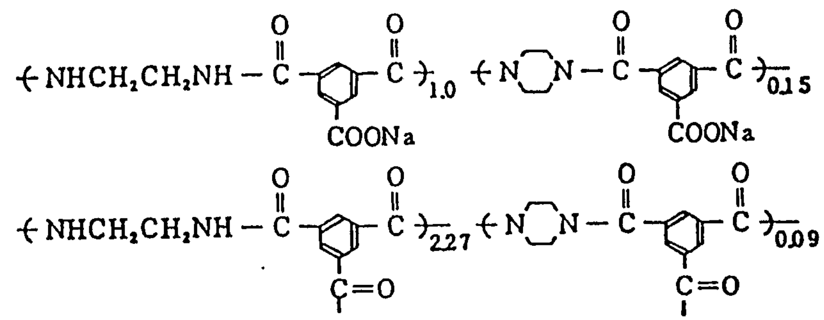 |
| 12 | 2.8 7 | 6 0.4 5 | 4.4 0 | 1 1.7 9 | 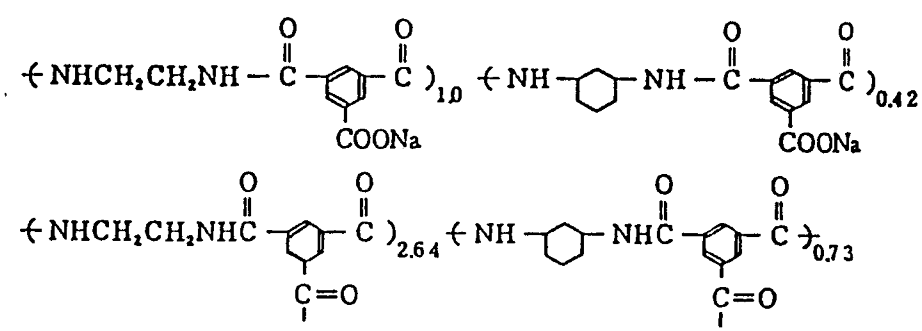 |

Examples 13—17

Composite membranes were obtained according to Example 1, wherein respective aqueous solutions of 1/50 mole diamines described in the following Table 5 were used in place of an aqueous solution of ethylenediamine. After the basic separation performance of these membranes were evaluated, the membranes were subjected to the chlorine resistance test and washing test with the use of a reducing agent to ascertain how the membrane performances changed.

TABLE 5

| Example | Aliphatic diamine | Performance of composite membrane | | | |
|---|---|---|---|---|---|
| | | Initial *1 performance | | Post *2 chlorine test performance | |
| | | W.F. (l/m²·hr) | R.S. (%) | W.F. | S.R. |
| 13 | 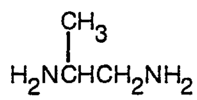 | 37.8 | 93.1 | 36.3 | 93.9 |
| 14 | $H_2N\text{-}(CH_2)_3\text{-}NH_2$ | 23.0 | 97.3 | 20.5 | 97.1 |
| 15 | 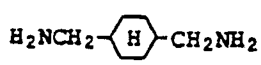 | 28.0 | 96.8 | 23.2 | 98.0 |
| 16 | 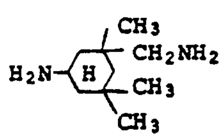 | 119.8 | 85.7 | 47.9 | 90.5 |
| 17 | 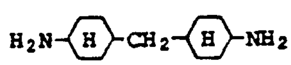 | 46.4 | 95.8 | 43.2 | 94.8 |

*1: Data obtained under the conditions of 42.5 kg/cm², 0.5% NaCl, and 25°C 2 hours after starting the test.

*2: After the initial performance values were measured, the 20-hour reverse osmosis test was conducted with the use of an aqueous solution of 1000 ppm hypochlorous acid. Then the data were obtained after the membranes were washed with an aqueous solution of 300 ppm sodium hydrosulfite for 30 minutes.

Examples 18—19

Composite membranes were obtained according to Example 1, wherein equimolar mixtures (as solutions of 0.2 wt % carbon tetrachloride), one consisting of trimesic acid chloride and isophthalic acid chloride and the other consisting of trimesic acid chloride and 5-sulfoisophthalic acid trichloride, were used as cross-linking agent instead of a single use of trimesic acid chloride. The basis separation performance and chlorine resistivity of these composite membranes were evaluated under the same conditions as Examples 13—17. The results are shown in Table 6.

TABLE 6

| Example | Cross-linking agent | Performance of composite membrane | | | |
|---|---|---|---|---|---|
| | | Initial performance | | Post chlorine test performance | |
| | | W.F. (l/m²·hr) | S.R. (%) | W.F. | S.R. |
| 18 | IPC*1/TMC*2 | 27.0 | 97.0 | 25.4 | 98.4 |
| 19 | SPC*3/TMC | 54.7 | 94.3 | 47.3 | 97.2 |

*1 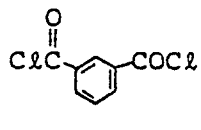 , *2 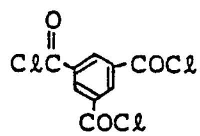

*3 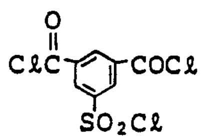

Example 20—26

The membrane performance of eliminating water-soluble organic substances mentioned in the following Table 7 was evaluated with the use of the composite membrane of Example 1.

TABLE 7

| Example | Organic substance used | Composite membrane* performance | |
|---|---|---|---|
| | | W.F. (l/m²·hr) | S.R. (%) |
| 20 | Glucose | 50.7 | 99.9 |
| 21 | Sucrose | 49.8 | >99.9 |
| 22 | Leucine | 51.0 | 99.5 |
| 23 | Aspartic acid | 58.8 | 99.6 |
| 24 | Lactic acid | 57.5 | 98.8 |
| 25 | Acetic acid | 44.3 | 73.8 |
| 26 | Ethanol | 51.3 | 82.1 |

* Concentration of each solute: 1.0 wt %, (42.5 kg/cm², 25°C)

Example 27—30

A protective layer of 0.2 to 0.3 μm thick membrane was formed on the surface of composite membranes prepared according to Example 1 by coating the membranes with each of protective polymer solutions respectively having a composition as shown in Table 8. These composite membranes were subjected to the chlorine resistance test under the same conditions as Examples 13—17 and a remarkable increase in chlorine resistance over a long period, was observed.

TABLE 8

| Example | Protective layer | Performance of composite membrane | | | | | |
|---|---|---|---|---|---|---|---|
| | | Initial performance | | Performance 20 hrs later | | Performance 150 hrs later | |
| | | W.F. | S.R. | W.F. | S.R. | W.F. | S.R |
| 27*1 | PVA 5%<br>Formalin 1% | 32.5 | 95.7 | 27.3 | 96.2 | 25.4 | 96.3 |
| 28*2 | PVA 5%<br>Glutaraldehyde 1% | 41.2 | 93.3 | 36.4 | 94.7 | 31.8 | 95.1 |
| 29*3 | Poly-ε-caprolamide 1%<br>$CaCl_2$ 20% | 39.8 | 94.0 | 31.3 | 97.2 | 27.4 | 97.8 |
| 30 | None | 57.6 | 96.3 | 51.3 | 97.2 | 98.3 | 92.3 |

*1: Heat-treated at 100°C for 5 minutes.
*2: Heat-treated at 70°C for 5 minutes.
*3: Heat-treated at 50°C for 10 minutes.

Examples 31—33 and Comparison Example 2

The composite membranes (in Examples 31—33) obtained according to Example 1 and the composite membrane obtained according to Comparison Example 1 (referred herein as Comparison Example 2) were immersed in the respective solutions of 2% oxidizing agent shown in the following Table 9 at room temperature for 20 hours. The result confirmed the changes in the performance of the respective composite membranes and are set out in Table 9.

TABLE 9

| Example | Oxidizing agent | Performance of composite membrane | | | |
|---|---|---|---|---|---|
| | | Initial performance | | Post immersion performance | |
| | | W.F. | S.R. | W.F. | S.R. |
| 31 | $H_2O_2$ | 57.3 | 95.9 | 56.2 | 96.9 |
| 32 | $NaBO_4$ | 59.1 | 96.4 | 47.3 | 96.7 |
| 33 | Iodophor | 63.0 | 95.1 | 65.5 | 95.5 |
| Comparison Example 2 | $H_2O_2$ | 61.4 | 96.3 | 350.1 | 54.3 |

Industrial Application

Having an outstanding resistance to oxidization in addition to an excellent selective permeability, the composite semipermeable membrane of the present invention can be used in a wide range of separation operations in the fields of fresh water generation, enrichment of valuable substances, fractionation of water soluble organic substances, etc. It can especially be effectively used for separation operations in the field of food processing where microbes are apt to proliferate and yet conventional membranes are hardly used for lack of resistance against strong sterilizers and bacteriocides.

**Claims**

1. A composite semipermeable membrane comprising a microporous membrane and an amino group-containing membrane formed thereon, characterised in that said amino group-containing membrane is a cross-linked high polymer membrane containing structural units expressed by the following formula (I) at a mole ratio of at least 50%

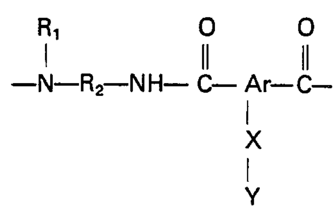

(I)

wherein $R_1$ indicates an alkyl group, which may contain a hydroxyl group, having 1 to 3 carbon atoms, or a hydrogen atom; $R_2$ indicates an aliphatic hydrocarbon residue, which may contain an oxygen atom, having 2 to 15 carbon atoms; Ar indicates a condensed or non-condensed aromatic hydrocarbon residue; X indicates a carbonyl group

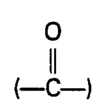

or a sulfonyl group ($—SO_2—$); Y at least partly indicates a direct bond where cross-linking takes place and the remainder indicates —OM or

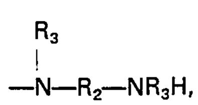

where M indicates a hydrogen atom, alkali metal, alkaline earth metal, or ammonium group, and $R_3$ has the same definition as $R_1$, at least one $R_3$ being a hydrogen atom.

2. A composite semipermeable membrane according to Claim 1, wherein $R_2$ is an aliphatic hydrocarbon residue having 2 to 14 carbon atoms.

3. A composite semipermeable membrane according to Claim 1, wherein Ar is a condensed or noncondensed aromatic hydrocarbon residue having 6 to 15 carbon atoms.

4. A composite semipermeable membrane according to Claim 1, wherein $R_1$ is a hydrogen atom.

5. A composite semipermeable membrane according to Claim 1, wherein the ratio of the direct bond of Y is in the range of 30 to 90%.

6. A composite semipermeable membrane according to Claim 1, wherein the ratio of the direct bond of Y is in the range of 50 to 70%.

7. A composite semipermeable membrane according to Claim 1, wherein X is a carbonyl group.

8. A composite semipermeable membrane according to Claim 1, wherein said cross-linked high polymer membrane contains structural units expressed by the following formula (II)

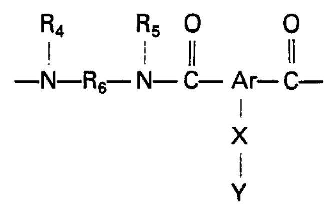

(II)

wherein $R_4$ and $R_5$ are alkyl groups, each of which may independently contain a hydroxyl group, having 1 to 3 carbon atoms, or otherwise $R_4$ and $R_5$ are linked to one another or respectively to $R_6$ to form a piperazyl group or dipiperidylalkylen group, which may be substituted by a methyl group or an ethyl group, together with two nitrogen atoms and $R_6$ to which they are linked; $R_6$ indicates an aliphatic hydrocarbon residue, which may contain an oxygen atom, having 2 to 15 carbon atoms, and Ar, X and Y are as specified in Claim 1.

9. A composite semipermeable membrane according to Claim 8, wherein the structural units expressed by said formula (II) are present in a mole ratio of 1% to 40%.

10. A composite semipermeable membrane according to Claim 8, wherein the membrane comprises structural units respectively expressed by the formula (I) and formula (II) in which $R_1$ is a hydrogen atom; $R_2$ and $R_6$ are $—C_2H_4—$; Ar is

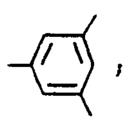

X is a carbonyl group; Y is a direct bond; $R_4$ and $R_5$ are both ethyl groups or bond to another to form an ethylene group; and the structural units expressed by the formula (II) are present in mole ratio of 5% to 30%.

11. A composite semipermeable membrane according to Claim 1, wherein said cross-linked high polymer membrane is protected with a water-insoluble polyvinyl alcohol coating or a porous aliphatic polyamide coating.

12. A process for the preparation of a composite semipermeable membrane as claimed in Claim 1 which comprises reacting a diamine compound which contains a compound expressed by the following formula (III) at a mole ratio of at least 50%.

$$R_1NH—R_2—NH_2 \quad \text{(III)}$$

wherein $R_1$ and $R_2$ are as given in Claim 1; with a cross-linking agent mainly consisting of a compound expressed by the following formula (IV) on a micro-porous membrane

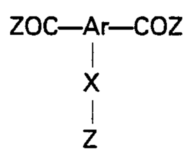

(IV)

wherein the Z's are the same or different from each other, and each is a halogen atom; and X is a carbonyl group

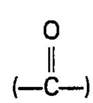

or a sulfonyl group $(—SO_2—)$.

13. A process for the preparation of a composite semipermeable membrane according to Claim 12, wherein said diamine compound contains a diamine compound expressed by the following formula (V)

$$R_4HN—R_6—NR_5H \qquad (V)$$

wherein $R_4$, $R_5$ and $R_6$ are as given in Claim 8.

14. A process as claimed in Claim 12 or 13 which comprises allowing said diamine compound to react with said cross-linking agent on said micro-porous membrane, forming a polyvinyl alcohol coating thereon, and making the thus formed polyvinyl alcohol coating water-insoluble.

15. A process as claimed in Claim 12 or 13 which comprises forming a porous protective coating of aliphatic polyamide on the membrane by applying to the surface thereof a solution of aliphatic polyamide containing a poring agent, followed by extracting the poring agent by elution after drying.

16. A method of using a composite semipermeable membrane as claimed in any of Claims 1 to 11 in a reverse osmosis operation, characterised by the repeated use of said membrane comprising pasteurizing the membrane with an aqueous solution of pH 4 to pH 7 containing 0.5 to 5,000 ppm bactericide of the chlorine type and then washing the membrane with an aqueous solution containing 10 to 5,000 ppm of reducing agent.

**Patentansprüche**

1. Zusammengesetzte semipermeable Membran enthaltend eine mikroporöse Membran und eine darauf gebildete Aminogruppenhaltige Membran, dadurch gekennzeichnet, daß die Aminogruppen-haltige Membran eine vernetzte hochpolymere Membran ist, welche durch die folgende Formel (I) ausgedrückte Struktureinheiten in einem Molverhältnis von wenigstens 50% aufweist

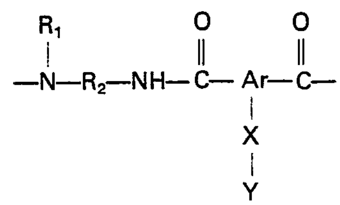

(I)

worin $R_1$ eine Alkylgruppe mit 1 bis 3 Kohlenstoffatomen, die eine Hydroxylgruppe aufweisen kann, oder ein Wasserstoffatom bedeutet, $R_2$ einen aliphatischen Kohlenwasserstoffrest mit 2 bis 15 Kohlenstoffatomen darstellt, der ein Sauerstoffatom aufweisen kann, Ar einen kondensierten oder nicht kondensierten aromatischen Kohlenwasserstoffrest bedeutet,

X eine Carbonylgruppe

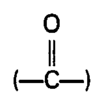

oder eine Sulfonylgruppe ($—SO_2—$) bedeutet, Y wenigstens teilweise eine direkte Bindung darstellt, wo die Vernetzung erfolgt, und der Rest — OM oder

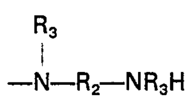

darstellt, worin M ein Wasserstoffatom, ein Alkalimetall, ein Erdalkalimetall oder eine Ammoniumgruppe bedeutet, und $R_3$ die gleiche Definition wie $R_1$ hat, wobei wenigstens ein $R_3$ ein Wasserstoffatom ist.

2. Zusammengesetzte semipermeable Membran nach Anspruch 1, dadurch gekennzeichnet, daß $R_2$ ein aliphatischer Kohlenwasserstoffrest mit 2 bis 14 Kohlenstoffatomen ist.

3. Zusammengesetzte semipermeable Membran nach Anspruch 1, dadurch gekennzeichnet, daß Ar ein kondensierter oder nicht kondenzierter aromatischer Kohlenwasserstoffrest mit 6 bis 15 Kohlenstoffatomen ist.

4. Zusammengesetzte semipermeable Membran nach Anspruch 1, dadurch gekennzeichnet, daß $R_1$ ein Wasserstoffatom ist.

5. Zusammengesetzte semipermeable Membran nach Anspruch 1, dadurch gekennzeichnet, daß das Verhältnis der direkten Bindung von Y im Bereich von 30 bis 90% liegt.

6. Zusammengesetzte semipermeable Membran nach Anspruch 1, dadurch gekennzeichnet, daß das Verhältnis der direkten Bindung von Y im Bereich von 50 bis 70% liegt.

7. Zusammengesetzte semipermeable Membran nach Anspruch 1, dadurch gekennzeichnet, daß X ein Carbonylgruppe ist.

8. Zusammengesetzte semipermeable Membran nach Anspruch 1, dadurch gekennzeichnet, daß die vernetzte hochpolymere Membran Struktureinheiten enthält, die durch die folgende Formel (II) ausgedrückt werden

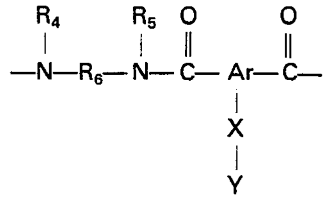

(II)

worin $R_4$ und $R_5$ Alkylgruppen mit 1 bis 3 Kohlenstoffatomen bedeuten, die jeweils unabhängig eine Hydroxylgruppe enthalten können oder worin $R_4$ und $R_5$ miteinander oder mit $R_6$ unter Bildung einer Piperazylgruppe oder Dipiperidylalkylengruppe, die durch eine Methylgruppe oder Äthylgruppe substituiert sein kann, miteinander mit zwei Stickstoffatomen und $R_6$, woran sie gebunden sind, verbunden sein können, $R_6$ einen aliphatischen Kohlenwasserstoffrest mit 2 bis 15 Kohlenstoffatomen bedeutet, der ein Sauerstoffatom enthalten kann und Ar, X und Y die in Anspruch 1 angegebenen Bedeutung besitzen.

9. Zusammengesetzte semipermeable Membran nach Anspruch 8, dadurch gekennzeichnet, daß die durch die Formel (II) ausgedrückten Struktureinheiten in einem Molverhältnis von 1% bis 40% vorliegen.

10. Zusammengesetzte semipermeable Membran nach Anspruch 8, dadurch gekennzeichnet, daß die Membran Struktureinheiten enthält die durch Formel (I) bzw. (II) ausgedrückt sind, worin $R_1$ ein Wasserstoffatom, $R_2$ und $R_6$ die Gruppe $—C_2H_4—$, Ar die Gruppe

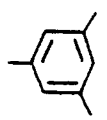 ,

X eine Carbonylgruppe, Y eine direkte Bindung bedeuten, $R_4$ und $R_5$ beide Äthylgruppen sind oder miteinander unter Bildung einer Äthylgruppe verbunden sind und die durch Formel (II) ausgedrückten Struktureinheiten in einem Molverhältnis von 5% bis 30% vorliegen.

11. Zusammengesetzte semipermeable Membran nach Anspruch 1, dadurch gekennzeichnet, daß die vernetzte hochpolymere Membran durch einen wasserunlöslichen Polyvinylalkoholüberzug oder einen porösen aliphatischen Polyamidüberzug geschützt ist.

12. Verfahren zur Herstellung einer zusammengesetzten semipermeablen Membran nach Anspruch 1, dadurch gekennzeichnet, daß man eine Diaminverbindung, die eine durch die folgende Formel (III) ausgedrückte Verbindung in einem Molverhältnis von wenigstens 50% enthält,

$$R_1NH—R_2—NH_2 \qquad (III)$$

worin $R_1$ und $R_2$ die in Anspruch 1 angegebene Bedeutung besitzen, mit einem Vernetzungsmittel, das vor allem aus einer durch die folgende Formel (IV) ausgedrückten Verbindung besteht, auf einer mikroporösen Membran reagieren läßt

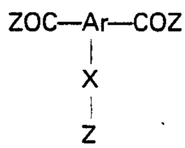

(IV)

worin die Gruppen Z gleich oder voneinander verschieden sind und jede ein Halogenatom bedeutet und X eine Carbonylgruppe

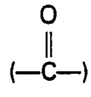

oder eine Sulfonylgruppe $(—SO_2—)$ bedeutet.

13. Verfahren zur Herstellung einer zusammengesetzten semipermeablen Membran nach Anspruch 12, dadurch gekennzeichnet, daß die Diaminverbindung eine durch die folgende Formel (V) ausgedrückte Diaminverbindung aufweist

$$R_4HN—R_6—NR_5H \qquad (V)$$

worin $R_4$, $R_5$ und $R_6$ die in Anspruch 8 angegebenen Bedeutungen besitzen.

14. Verfahren nach Anspruch 12 oder 13, dadurch gekennzeichnet, daß man die Diaminverbindung mit dem Vernetzungsmittel auf der mikroporösen Membran reagieren läßt, einen Polyvinylalkoholüberzug darauf bildet und den so gebildeten Polyvinylalkoholüberzug wasserunlöslich macht.

15. Verfahren nach Anspruch 12 oder 13 dadurch gekennzeichnet, daß man einen porösen Schutzüberzug aus aliphatischem Polyamid auf der Membran bildet, indem man auf die Oberfläche derselben eine Lösung von aliphatischem Polyamid aufbringt, das ein Poren-bildendes Mittel enthält und dann das Poren-bildende Mittel durch Elution nach dem Trocknen extrahiert.

16. Verfahren zur Anwendung einer zusammengesetzten semipermeablen Membran nach einem der Ansprüche 1 bis 11 bei der Umkehrosmose, gekennzeichnet durch die wiederholte Verwendung dieser Membran, wobei man die Membran mit einer wässrigen Lösung von pH 4 bis pH 7, die 0,5 bis 5000 ppm an bakterizidem Mittel des Chlortyps enthält, pasteurisiert und dann die Membran mit einer wässrigen Lösung wäscht, die 10 bis 5000 ppm Reduktionsmittel aufweist.

**Revendications**

1. Membrane semi-perméable composite comprenant une membrane microporeuse et une membrane contenant des groupes amino formée sur celle-ci, caractérisée par le fait que ladite membrane contenant des groupes amino est une membrane en un haut polymère réticulé, contenant des motifs structuraux exprimés par la formule (I) suivante, à un taux molaire d'au moins 50%

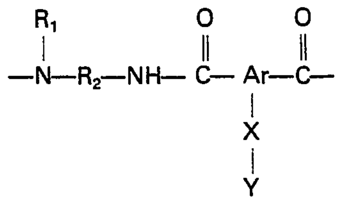

(I)

formule dans laquelle:

$R_1$ indique un groupe alkyle, qui peut contenir un groupe hydroxyle et qui renferme de 1 à 3 atomes de carbone, ou bien un atome d'hydrogene;

$R_2$ indique un résidu hydrocarboné aliphatique, qui peut contenir un atome d'oxygène et qui renferme de 2 à 15 atomes de carbone;

Ar indique un résidu hydrocarboné aromatique condensé ou non condensé;

X indique un groupe carbonyle

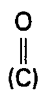

ou un groupe sulfonyle ($—SO_2—$);

Y, au moins partiellement, indique une liaison directe où la réticulation a lieu, et le reste indique —OM ou

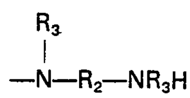

où M indique un atome d'hydrogène, un métal alcalin, un métal alcalino-terreux, ou un groupe ammonium, et $R_3$ a la même définition que $R_1$, au moins l'un des $R_3$ étant un atome d'hydrogène.

2. Membrane semi-perméable composite selon la revendication 1, dans laquelle $R_2$ est un résidu hydrocarboné aliphatique, renfermanat de 2 à 14 atomes de carbone.

3. Membrane semi-perméable composite selon la revendication 1, dans laquelle Ar est un résidu hydrocarboné aromatique, condensé ou non condensé, renfermant de 6 à 15 atomes de carbone.

4. Membrane semi-perméable composite selon la revendication 1, dans laquelle $R_1$ est un atome d'hydrogène.

5. Membrane smei-perméable composite selon la revendication 1, dans laquelle le taux de la liaison directe de Y se situe dans la plage allant de 30 à 90%.

6. Membrane semi-perméable composite selon la revendication 1, dans laquelle le taux de la liaison directe de Y se situe dans la plage allant de 50 à 70%.

7. Membrane semi-permeable composite selon la revendication 1, dans laquelle X est un groupe carbonyle.

8. Membrane semi-perméable composite selon la revendication 1, dans laquelle la membrane en un haut polymère réticulé contient des motifs structuraux exprimés par la formule (II) suivante

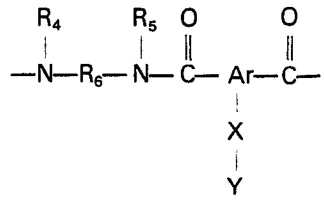

(II)

formule dans laquelle:

$R_4$ et $R_5$ sont des groupes alkyle, dont chacun peut, indépendamment, contenir un groupe hydroxyle et qui renferment chacun de 1 à 3 atomes de carbone, ou autrement, $R_4$ et $R_5$ sont reliés l'un à l'autre ou respectivement à $R_6$, pour former un groupe pipérazyle ou un groupe dipipéridylalkylène, qui peuvent être substitués par un groupe méthyle ou un groupe éthyle, conjointement avec les deux atomes d'azote et $R_6$ auquel ils sont liés;

$R_6$ indique un résidu hydrocarboné aliphatique, qui peut contenir un atome d'oxygène et qui renferme de 2 à 15 atomes de carbone; et

Ar, X et Y sont tels que précisés à la revendication 1.

9. Membrane semi-perméable composite selon la revendication 8, dans laquelle les motifs structuraux exprimés par la formule (II) sont présents à un taux molaire allant de 1% à 40%.

10. Membrane semi-perméable composite selon la revendication 8, dans laquelle la membrane comprend des motifs structuraux respectivement exprimés par la formule (I) et par la formule (II) dans lesquelles:

$R_1$ est un atome d'hydrogène;

$R_2$ et $R_6$ sont $—C_2H_4—$;

Ar est

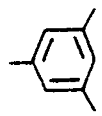

;

X est un groupe carbonyle;

Y est une liaison directe;

$R_4$ et $R_5$ sont tous les deux des groupes éthyle ou bien sont liés l'un à l'autre pour former un groupement éthylène;

et les motifs structuraux exprimés par la formule (II) sont présents à un taux molaire allant de 5 à 30%.

11. Membrane semi-permeable composite selon la revendication 1, dans laquelle la membrane en un haut polymère réticule est protégée par un revêtement en poly(alcool vinylique) insoluble dans l'eau ou par un revêtement en polyamide aliphatique poreux.

12. Procédé pour la préparation d'une membrane semi-perméable composite telle que définie à la revendication 1, qui consiste à faire réagir un composé diaminé qui contient un composé exprimé par la formule (III) suivante, à un taux molaire d'au moins 50%

$$R_1NH—R_2—NH_2 \quad \text{(III)}$$

formule dans laquelle $R_1$ et $R_2$ sont tels que donnés dans la revendication 1; avec un agent réticulant consistant principalement en un composé exprimé par la formule (IV) suivante, sur une membrane microporeuse

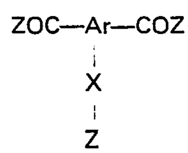

(IV)

formule dans laquelle:

les Z sont identiques ou bien sont différents les uns des autres, et chacun d'eux est un atome d'halogène;

et X est un groupe carbonyle

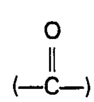

ou un groupe sulfonyle ($—SO_2—$).

13. Procédé pour la préparation d'une membrane semi-perméable composite selon la revendication 12, dans lequel le composé diaminé contient un composé diaminé exprimé par la formule (V) suivante

$$R_4HN—R_6—NR_5H \quad (V)$$

formule dans laquelle $R_4$, $R_5$ et $R_6$ sont tels que donnés dans la revendication 8.

14. Procédé selon la revendication 12 ou 13, qui consiste à faire réagir le composé diaminé avec l'agent réticulant sur la membrane microporeuse, à former un revêtement en poly(alcool vinylique) sur celle-ci, et à rendre le revêtement en poly(alcool vinylique) ainsi formé insoluble dans l'eau.

15. Procédé selon la revendication 12 ou 13, qui consiste à former un revêtement protecteur poreux en un polyamide aliphatique sur la membrane, par application sur la surface de celle-ci d'une solution d'un polyamide aliphatique contenant un agent de cellularité, suivie par une extraction de l'agent de cellularité par élution après séchage.

16. Procédé pour utiliser une membrane semi-perméable composite telle que définie à l'une des revendications 1 à 11 dans une opération d'osmose inverse, caractérisé par l'utilisation répétée de ladite membrane consistant à pasteuriser la membrane avec une solution aqueuese ayant un pH allant de 4 à 7, contenant 0,5 à 5 000 ppm de bactéricide de type chlore, et ensuite à laver la membrane avec une solution aqueuse contenant 10 à 5 000 ppm d'agent réducteur.